# FASCICULE DE BREVET EUROPEEN

(11) **EP 3 687 344 B1**
(45) Date de publication et mention de la délivrance du brevet: **02.06.2021**
(21) Numéro de dépôt: 18783552.5
(22) Date de dépôt: 24.09.2018
(51) Int. Cl.: A47J 36/32, A47J 27/00

(54) **SYSTEME ET PROCEDE POUR LA CUISSON DE RIZ**
VORRICHTUNG UND VERFAHREN ZUM KOCHEN VON REIS
DEVICE AND METHOD FOR COOKING RICE

(30) Priorité: 27.09.2017 FR 1758982
(43) Date de publication de la demande: 05.08.2020
(73) Titulaire: SEB S.A., 69130 Ecully (FR)
(72) Inventeur: GAUTHIER, Sébastian, 69007 Lyon (FR); DECROZE, Nicolas, 74000 Annecy (FR)
(74) Mandataire: SEB Développement
(86) Numéro de dépôt international: PCT/FR2018/052337
(87) Numéro de publication internationale: WO 2019/063922

(56) Documents cités:
- FR-A1- 3 040 614
- JP-A- H0 712 722
- US-A1- 2013 011 537

## Description

La présente invention se rapporte au domaine technique général des appareils électroménagers pour la cuisson du riz.

Plus particulièrement, la présente invention se rapporte à un système de cuisson de riz ainsi qu'à un procédé de cuisson de riz à partir d'un tel système de cuisson de riz.

Il est connu de disposer d'un cuiseur à riz comprenant des programmes de cuisson prédéterminés et sélectionnables par un utilisateur et éventuellement d'une interface utilisateur informant l'utilisateur sur certaines étapes de préparation à suivre pour optimiser la cuisson du riz, notamment des étapes de trempage. Un tel cuiseur à riz est décrit dans le document FR-A-3040614.

Cependant, de tels cuiseurs à riz ne proposent pas de programmes de cuisson spécifiques en fonction de la nature du riz à cuire.

Or, les propriétés organoleptiques et/ou nutritionnelles du riz peuvent varier d'une nature de riz à une autre malgré un programme de cuisson identique.

Un même programme de cuisson ne peut donc vraisemblablement pas être adapté à la cuisson de riz de natures différentes.

Afin d'adapter un programme de cuisson à une nature de riz déterminée, il serait éventuellement envisageable de permettre à l'utilisateur de déclarer la nature du riz à cuire au moyen d'une interface utilisateur.

Cependant, une telle solution complexifie l'interface utilisateur du cuiseur à riz.

De plus, compte tenu de la grande quantité de natures de riz différentes, une telle solution ne garantit pas non plus que la nature de riz déclarée soit effectivement la nature du riz introduit dans la cuve de cuisson du cuiseur à riz.

Il est connu de disposer d'appareils de cuisson permettant d'analyser un aliment à cuisiner avant sa cuisson notamment par le biais d'un dispositif de détection spectrale dans le proche infrarouge placé en partie dans la cuve d'un appareil de cuisson, d'acquérir des données puis de comparer ces données à l'aide d'un modèle prédictif pour déterminer un nouveau programme de cuisson ou bien ajuster un programme de cuisson existant.

Cependant, le positionnement d'une partie du dispositif de détection spectrale dans la cuve est complexe, ce qui augmente le coût de fabrication de l'appareil de cuisson.

De plus, le dispositif de détection spectrale est soumis aux contraintes thermiques inhérentes à l'utilisation d'une cuve, ce qui porte atteinte à la fiabilité du dispositif de détection spectrale et donc de l'appareil de cuisson.

Aussi, la présente invention a pour but de résoudre tout ou partie des inconvénients mentionnés ci-dessus, notamment en proposant un système de cuisson de riz capable d'identifier de manière simple et fiable une nature de riz et d'optimiser les propriétés organoleptiques et/ou nutritionnelles de cette nature de riz après cuisson.

A cet effet, l'invention se rapporte à un système de cuisson de riz comprenant :
- un cuiseur à riz comprenant :
   - une cuve apte à recevoir une quantité déterminée de riz à cuire, et
   - des moyens de traitement aptes à exécuter une séquence d'instructions pour contrôler des étapes de préparation et de cuisson du riz ou simplement des étapes de cuisson du riz reçu dans la cuve,
   - un premier moyen de communication avec un verre doseur,
- un verre doseur comprenant :
   - un contenant destiné à mesurer une quantité de riz à introduire dans la cuve du cuiseur à riz,
   - un spectromètre à proche infrarouge apte à acquérir au moins un spectre d'analyse du riz disposé dans le contenant,
   - un deuxième moyen de communication apte à échanger l'au moins un spectre d'analyse avec le cuiseur à riz via le premier moyen de communication,
   - une source d'alimentation apte à alimenter en énergie le spectromètre à proche infrarouge et le deuxième moyen de communication,
- un modèle prédictif prédéterminé établi à partir d'une base de données comprenant des séquences d'instructions de référence associées à des spectres d'analyse de référence portant sur des riz de natures différentes,

les moyens de traitement étant agencés pour déterminer une séquence d'instructions particulière en fonction du modèle prédictif prédéterminé et de l'au moins un spectre d'analyse du riz réalisé à partir du spectromètre à proche infrarouge.

Cette disposition permet de réaliser un système simple et fiable pour définir une séquence d'instructions particulière optimale pour les propriétés organoleptiques et/ou nutritionnelles après cuisson du riz versé dans le contenant du verre doseur.

Selon un aspect de l'invention, les moyens de traitement déterminent une séquence d'instructions particulière en se basant sur une analyse statistique ou sur une classification de l'au moins un spectre d'analyse délivré par le spectromètre à proche infrarouge par rapport aux séquences d'instructions de référence de la base de données.

Une classification de l'au moins un spectre d'analyse délivré par le spectromètre à proche infrarouge permet d'optimiser la cuisson du riz en limitant les ressources de calcul des moyens de traitement du cuiseur à riz pour déterminer une séquence d'instructions particulière, cette séquence d'instructions particulière étant une séquence d'instruction de référence.

Une analyse statistique permet de déterminer une séquence d'instructions particulière plus précise mais nécessite davantage de ressources de calcul des moyens de traitement, cette séquence d'instructions particulière n'étant pas forcément une séquence d'instructions de référence mais diffère légèrement d'une de ces séquences d'instructions, par exemple de par l'ajustement d'un temps de trempage, d'une température de cuisson ou d'une durée de cuisson.

Selon un aspect de l'invention, la base de données est comprise dans le cuiseur à riz ou bien le cuiseur à riz comprend des moyens supplémentaires de communication avec un serveur distant et la base de données est comprise en tout ou partie dans le serveur distant.

Un serveur distant comprenant la base de données permet de fournir une base de données commune à un ensemble de cuiseurs à riz. Cela permet également de mettre à jour et/ou d'enrichir de manière centralisée la base de données par exemple avec de nouvelles variétés de riz et donc de mettre à jour également le modèle prédictif.

Selon un aspect de l'invention, la source d'alimentation comprend une batterie.

Selon un aspect de l'invention, le verre doseur comprend un module de charge de la source d'alimentation apte à interagir avec un dispositif de chargeur sans fil.

Cette disposition permet de recharger facilement la source d'alimentation du verre doseur.

Selon un aspect de l'invention, le cuiseur à riz comprend le dispositif de chargeur sans fil apte à interagir avec le module de charge du verre doseur.

Cette disposition permet de faciliter l'utilisation du système de cuisson de riz.

Selon un aspect de l'invention, le cuiseur à riz comprend un logement de stockage apte à recevoir le verre doseur et à le positionner de manière à ce que le dispositif de chargeur sans fil puisse interagir avec le module de charge de la source d'alimentation.

Cette disposition permet de faciliter encore davantage l'utilisation du système de cuisson de riz en offrant à l'utilisateur une solution complète pour l'utilisation de son système de cuisson.

Selon un aspect de l'invention, le premier moyen de communication et le deuxième moyen de communication sont du type sans fil, de préférence selon un protocole de communication Bluetooth.

Cette disposition permet de faciliter la manipulation du verre doseur tout en limitant la consommation d'énergie.

Selon un aspect de l'invention, le cuiseur à riz comprend une interface utilisateur apte à déclencher l'acquisition de l'au moins un spectre d'analyse par le spectromètre à proche infrarouge.

Cette disposition permet une meilleure ergonomie d'utilisation pour l'utilisateur.

Selon un aspect de l'invention, le système de cuisson de riz comprend des moyens pour déterminer un nombre de personnes destinées à consommer le riz, les séquences d'instructions de référence étant également associées à des nombres de personnes destinées à consommer le riz.

Selon un aspect de l'invention, l'interface utilisateur est utilisée pour déclarer le nombre de personnes destinées à consommer le riz.

Selon un aspect de l'invention, le verre doseur comprend un moyen de détection du versement du riz dans la cuve.

Selon un aspect de l'invention, le moyen de détection comprend un accéléromètre et/ou un gyroscope.

Selon un aspect de l'invention, une séquence d'instructions comprend l'affichage sur une interface utilisateur d'actions à réaliser par l'utilisateur, notamment un nombre de rinçages, un temps de trempage et/ou une quantité d'eau de cuisson à verser dans la cuve et un programme de cuisson déterminé, notamment avec des paramètres de cuisson comme la température de cuisson et le temps de cuisson, ou bien une séquence d'instructions comprend simplement un programme de cuisson déterminé, notamment avec des paramètres de cuisson comme la température de cuisson et le temps de cuisson.

Cette disposition permet d'optimiser la cuisson du riz via la réalisation de différentes actions dont une partie peut être réalisée par l'utilisateur.

Selon un aspect de l'invention, le modèle prédictif se base sur des propriétés intrinsèques du riz comme le taux d'amylose et/ou le taux d'amylopectine et/ou la température de gélatinisation et/ou la variété/type/nature de riz, et/ou sur d'autres paramètres comme la marque commerciale du riz et/ou tout autre paramètre en corrélation avec une séquence d'instruction optimale pour la cuisson du riz.

L'amylose et/ou l'amylopectine sont des sucres dont le taux influence le plus les séquences d'instructions de préparation et/ou de cuisson du riz.

La prise en considération de tout ou partie de ces paramètres permet d'optimiser efficacement la cuisson du riz.

Selon un aspect de l'invention, l'au moins un spectre d'analyse du riz acquis par le spectromètre à proche infrarouge est compris dans une gamme de longueur d'onde allant de 200 nm à 2500 nm.

Cette disposition permet d'obtenir un spectre d'analyse dont les caractéristiques permettent d'obtenir davantage d'informations sur la nature du riz analysé.

La présente invention se rapporte également à un procédé de cuisson de riz à partir d'un système tel que décrit précédemment, comprenant des étapes consistant à :
(i) verser du riz dans le contenant du verre doseur,
(ii) acquérir au moins un spectre d'analyse du riz à partir du spectromètre à proche infrarouge du verre doseur,
(iii) communiquer cet au moins un spectre d'analyse au cuiseur à riz,
(iv) déterminer une séquence d'instructions particulière à l'aide du modèle prédictif prédéterminé et de l'au moins un spectre d'analyse du riz réalisé à partir du spectromètre à proche infrarouge,
(v) suivre la séquence d'instructions particulière pour cuire le riz.

Cette mise en œuvre permet à un utilisateur de maitriser la cuisson de son riz de manière à en optimiser les propriétés organoleptiques et/ou nutritionnelles.

Selon une mise en œuvre du procédé, le procédé comporte une étape préalable à l'étape (iv) au cours de laquelle un nombre de personne destinées à consommer le riz est déterminé, les séquences d'instructions de référence étant également associées à des nombres de personnes destinées à consommer le riz.

D'autres avantages et caractéristiques de l'invention ressortiront mieux à la lecture de la description détaillée de l'invention faite à titre illustratif et non limitatif en référence aux figures qui illustrent tout ou partie d'un système de cuisson de riz selon l'invention.
La figure 1 illustre une vue schématique d'un système de cuisson de riz selon un mode de réalisation préféré de l'invention.
La figure 2 est un schéma synoptique illustrant les différents éléments du système de cuisson de riz selon l'invention.
La figure 3 illustre une pluralité de spectres d'analyse du riz obtenus à partir d'un spectromètre à proche infrarouge.
La figure 4 illustre l'interaction entre le modèle prédictif et la base de données du système de cuisson de riz.
La figure 5 est un schéma synoptique illustrant les étapes d'un procédé de cuisson de riz selon l'invention.

Seuls les éléments nécessaires à la compréhension de l'invention ont été représentés. Pour faciliter la lecture des dessins, les mêmes éléments portent les mêmes références d'une figure à l'autre.

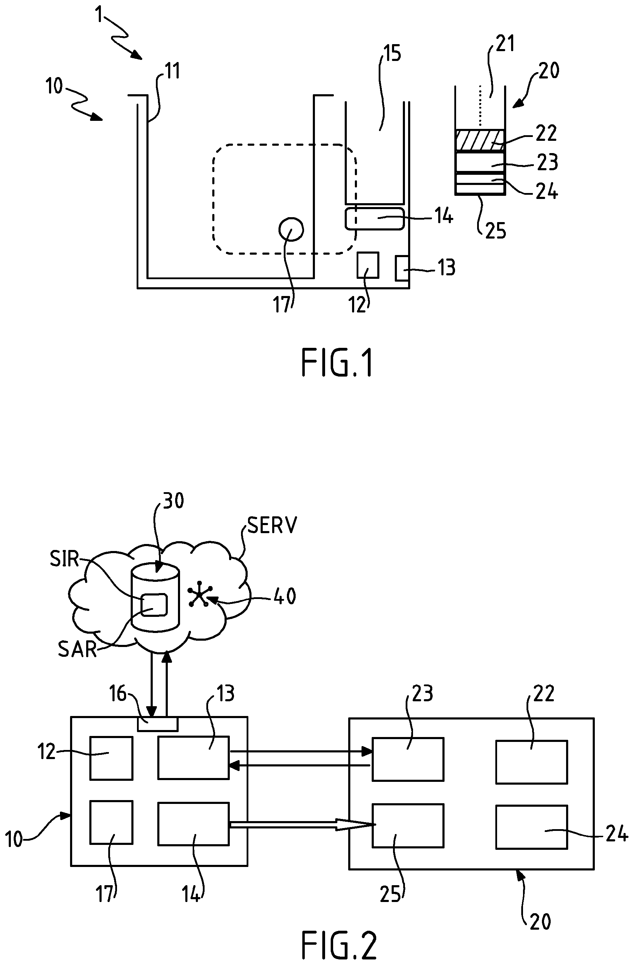

Comme illustré aux figures 1 à 2, un système 1 de cuisson de riz selon l'invention comprend un cuiseur 10 à riz, un verre doseur 20, une base de données 30 et un modèle prédictif 40.

Le cuiseur 10 à riz comporte une cuve 11 apte à recevoir une quantité déterminée de riz à cuire, des moyens de traitement 12 aptes à exécuter une séquence d'instructions pour contrôler des étapes de préparation et de cuisson du riz ou simplement des étapes de cuisson du riz reçu dans la cuve 11, et un premier moyen de communication 13 avec le verre doseur 20.

Les moyens de traitement 12 peuvent par exemple comprendre un microcontrôleur ou un microprocesseur aptes à exécuter les différentes tâches d'affichage et de calcul nécessaires au bon fonctionnement du système 1 de cuisson.

Une séquence d'instructions comprend l'affichage sur une interface utilisateur 17 d'actions à réaliser par l'utilisateur, notamment un nombre de rinçage, un temps de trempage ou une quantité d'eau de cuisson à verser dans la cuve et un programme de cuisson déterminé, notamment avec des paramètres comme la température de cuisson et le temps de cuisson.

Alternativement, une séquence d'instructions comprend simplement un programme de cuisson déterminé, notamment avec des paramètres comme la température de cuisson et le temps de cuisson.

Les moyens de traitement 12 doivent donc être en mesure d'afficher sur l'interface utilisateur 17 des pictogrammes ou images indiquant à l'utilisateur différentes étapes à réaliser ainsi que de calculer les valeurs de paramètres d'un programme de cuisson.

Des exemples de séquences d'instructions sont par exemple décrits dans la demande de brevet n°FR1656648 au nom de la demanderesse.

Le verre doseur 20 comprend un contenant 21 destiné à mesurer une quantité de riz à introduire dans la cuve 11 du cuiseur 10 à riz, un spectromètre à proche infrarouge 22 apte à acquérir au moins un spectre d'analyse SA du riz disposé dans le contenant 21, un deuxième moyen de communication 23 apte à échanger l'au moins un spectre d'analyse SA avec le cuiseur 10 à riz via le premier moyen de communication 13, et une source d'alimentation 24 apte à alimenter en énergie le spectromètre à proche infrarouge 22 et le deuxième moyen de communication 23.

Généralement le contenant comprend une graduation permettant à l'utilisateur de définir des proportions de riz en fonction d'un nombre de personnes déterminé.

En outre, le système 1 de cuisson peut comprendre des moyens (non illustrés) pour déterminer un nombre de personnes destinées à consommer le riz.

A cet effet, l'interface utilisateur 17 peut être utilisée pour simplement permettre à l'utilisateur de déclarer le nombre de personnes destinées à consommer le riz.

D'autres moyens peuvent également être utilisés pour déterminer automatiquement le nombre de personnes destinées à consommer le riz, notamment un moyen de détection du versement du riz dans la cuve 11, un tel moyen pouvant comprendre par exemple un accéléromètre et/ou un gyroscope disposé sur le verre doseur 20.

Dans le mode de réalisation présenté aux figures 1 et 2, le verre doseur 20 comprend en outre un module de charge 25 de la source d'alimentation 24 apte à interagir avec un dispositif de chargeur sans fil 14 du cuiseur 10 à riz.

A cet effet, le cuiseur 10 à riz comprend un logement 15 de stockage apte à recevoir le verre doseur 20 et à le positionner de manière à ce que le dispositif de chargeur sans fil 14 puisse interagir avec le module de charge 25 de la source d'alimentation 24 du verre doseur 20.

Le dispositif de chargeur sans fil 14 est du type à induction et comprend une bobine (non illustrée) apte à induire un courant dans une bobine (non illustrée) disposée dans le module de charge 25.

Bien entendu, d'autres moyens pour charger la source d'alimentation 24 peuvent être utilisés, notamment un connecteur physique de charge ou tout autre moyen équivalent.

Le premier moyen de communication 13 et le deuxième moyen de communication 23 sont quant à eux du type sans fil, de préférence selon un protocole de communication Bluetooth, et notamment Bluetooth Low Energy.

Bien entendu, d'autres moyens de communication peuvent être envisagés sans pour autant sortir du cadre de l'invention, par exemple des moyens de communication filaires ou bien via un connecteur disposé sur le verre doseur et une base de connexion disposé sur le cuiseur à riz, la communication des données étant réalisée au moment du branchement du connecteur sur sa base de connexion.

La base de données 30 comprend quant à elle des séquences d'instructions de référence SIR associés à des spectres d'analyse de référence SAR acquis sur des riz de natures différentes.

Un modèle prédictif 40 est établi sur la base des informations contenues dans la base de données 30.

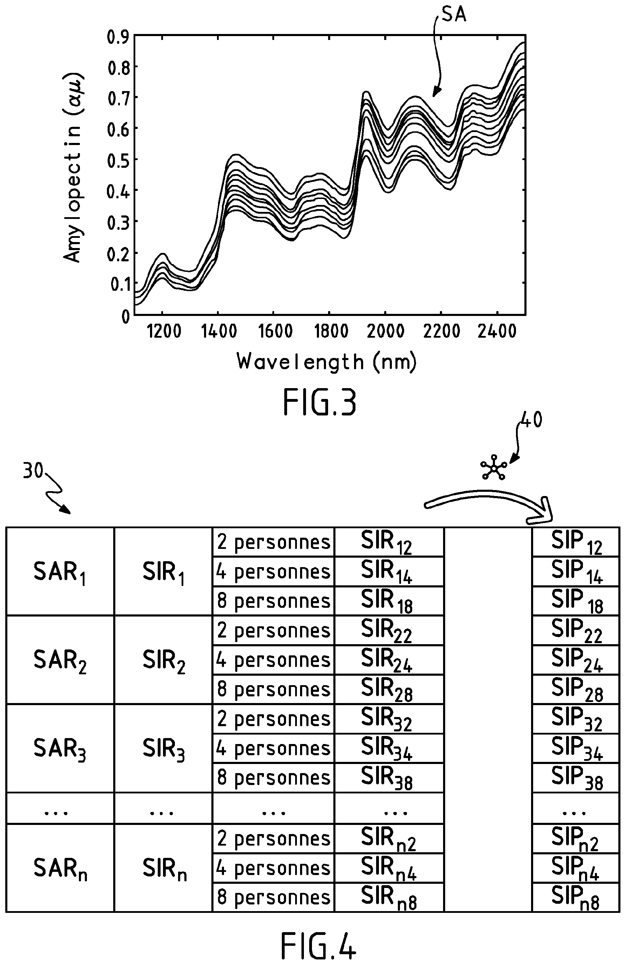

Un exemple de spectres d'analyse SA est illustré à la figure 3.

Ces spectres d'analyse SA présentent des pics dont le positionnement est caractéristique d'une nature de riz déterminée.

Le positionnement de ces pics est principalement dû à des propriétés intrinsèques du riz comme le taux d'amylose et/ou le taux d'amylopectine et/ou la température de gélatinisation ou la variété/type/nature de riz.

Cependant, d'autres paramètres comme la marque commerciale du riz ou tout autre paramètre en corrélation avec une séquence d'instructions optimale pour la cuisson du riz peuvent être utilisés pour établir le modèle prédictif 40 prédéterminé.

Ainsi, la base de données 30 est déterminée au préalable en laboratoire sur des riz déterminés de natures différentes.

De même, le modèle prédictif 40 est prédéterminé en laboratoire en s'appuyant sur le contenu de cette base de données 30.

Chaque séquence d'instructions de référence SIR est également déterminée au préalable en laboratoire et associée à une nature de riz déterminée de manière à ce que cette nature de riz après cuisson présente les meilleures propriétés organoleptiques et/ou nutritionnelles.

Comme également illustré dans le tableau de la figure 4, les séquences d'instructions de référence SIR peuvent également être associées à des nombres de personnes destinées à consommer le riz en plus d'être associées à des spectres d'analyse de référence SAR acquis sur des riz de natures différentes.

Dans l'exemple présenté, des séquences d'instructions de référence SIR sont déterminées pour une nature de riz et donc pour un spectre d'analyse de référence SAR selon que la quantité de riz pour la cuisson est prévue pour 2, 4 ou 8 personnes.

Bien entendu, d'autres nombres de personnes peuvent être prévus dans la base de données 30 pour établir le modèle prédictif 40.

La base de données 30 peut être comprise dans le cuiseur 10 à riz ou bien comme illustré à la figure 2, le cuiseur 10 à riz comprend des moyens supplémentaires de communication 16 avec un serveur distant SERV.

Ce serveur distant SERV peut être du type communément appelé « cloud » et permet de fournir une base de données 30 commune à un ensemble de système 1 de cuisson de riz. Cela permet également de mettre à jour et/ou d'enrichir de manière centralisée la base de données 30 par exemple avec de nouvelles natures de riz mais également d'affiner le modèle prédictif 40 établi à partir de cette base de données 30.

Selon l'invention, les moyens de traitement 12 sont agencés pour déterminer une séquence d'instructions particulière SIP à l'aide du modèle prédictif 40 prédéterminé et de l'au moins un spectre d'analyse SA du riz réalisé à partir du spectromètre à proche infrarouge 22.

Plusieurs spectres d'analyse SA peuvent être réalisés afin de contrôler la reproductibilité de la mesure ou bien minimiser la présence d'un artefact de mesure.

La détermination d'une séquence d'instructions particulière SIP se base principalement sur une comparaison du positionnement des pics de l'au moins un spectre d'analyse SA réalisé à partir du spectromètre à proche infrarouge 22 avec le positionnement des pics de l'ensemble des spectres d'analyse de référence SAR de la base de données 30.

Ainsi, plus le nombre de spectres d'analyse de référence SAR est important dans la base de données 30, et plus la corrélation avec un spectre d'analyse de référence SAR est pertinente, alors plus la séquence d'instructions particulière SIP pour optimiser les propriétés organoleptiques et/ou nutritionnelles du riz après cuisson est précise et le modèle prédictif 40 affiné.

Afin de déterminer cette séquence d'instructions particulière SIP, les moyens de traitement 12 peuvent se baser soit sur une analyse statistique, soit sur une classification de l'au moins un spectre d'analyse délivré par le spectromètre à proche infrarouge 22 par rapport aux séquences d'instructions de référence SIR de la base de données 30.

Un modèle prédictif 40 basé sur une classification de l'au moins un spectre d'analyse SA délivré par le spectromètre à proche infrarouge 22 permet d'optimiser la cuisson du riz en limitant les ressources de calcul des moyens de traitement 12 du cuiseur 10 à riz pour déterminer une séquence d'instructions particulière SIP, cette séquence d'instructions particulière SIP correspondant à une séquence d'instruction de référence SIR de la base de données 30.

Un modèle prédictif 40 basé sur une analyse statistique permet de déterminer une séquence d'instructions particulière SIP de manière plus précise et permet notamment de déterminer une séquence d'instructions particulière SIP pour une nature de riz qui ne serait pas référencée dans la base de données 30.

Cependant, une telle analyse statistique nécessite davantage de ressources de calcul de la part des moyens de traitement 12.

En effet, cette séquence d'instructions particulière SIP n'est pas forcément une séquence d'instructions de référence SIR de la base de données 30 mais diffère légèrement d'une de ces séquences d'instructions de référence SIR, par exemple de par l'ajustement d'un temps de trempage, d'une température de cuisson ou d'une durée de cuisson.

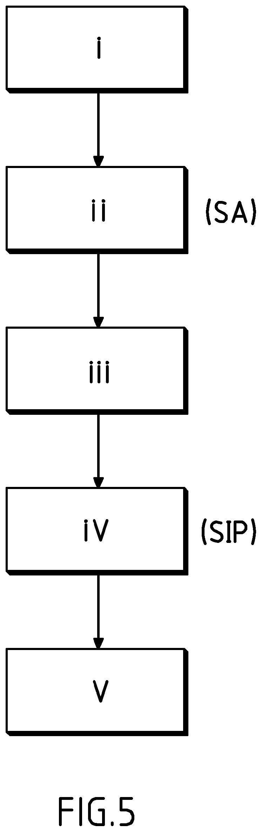

Ainsi, un utilisateur désireux d'utiliser le système 1 de cuisson de riz selon l'invention pour cuire du riz, mettra en œuvre un procédé, tel qu'illustré à la figure 5, dont la première étape (i) consistera à verser du riz dans le contenant 21 du verre doseur 20.

Il procédera ensuite, au cours d'une deuxième étape (ii), à l'acquisition d'au moins un spectre d'analyse SA du riz à partir du spectromètre à proche infrarouge 22 du verre doseur 20.

A cet effet, l'utilisateur peut utiliser une interface utilisateur 17 pour déclencher l'acquisition d'au moins un spectre d'analyse SA du riz à partir du spectromètre à proche infrarouge 22 du verre doseur 20.

L'acquisition dure quelques secondes.

Au cours d'une troisième étape (iii), cet au moins un spectre d'analyse SA est communiqué au cuiseur à riz depuis le deuxième moyen de communication 23 du verre doseur 20 vers le premier moyen de de communication 13 du cuiseur 10 à riz.

Cette communication survient automatiquement à la fin de l'acquisition de l'au moins un spectre d'analyse SA du riz.

Une fois l'au moins un spectre d'analyse SA reçu, au cours d'une quatrième étape (iv) les moyens de traitement 12 déterminent une séquence d'instructions particulière SIP à l'aide du modèle prédictif 40 prédéterminé et de l'au moins un spectre d'analyse SA du riz réalisé à partir du spectromètre à proche infrarouge 22.

A cet effet, les moyens de traitement 12 interrogent la base de données 30 se trouvant en local dans le cuiseur 10 à riz ou à distance sur le serveur distant SERV.

Au préalable de l'étape (iv) un nombre de personnes destinées à consommer le riz peut également être déterminé, les séquences d'instructions de référence SIR de la base de données 30 étant également associées à des nombres de personnes destinées à consommer le riz.

Enfin, au cours d'une ultime étape (v), l'utilisateur suit la séquence d'instructions particulière SIP pour cuire le riz.

Cette séquence d'instructions particulière est affichée sous forme d'étapes de préparation à réaliser par l'utilisateur et par la détermination d'un programme de cuisson comprenant les paramètres de cuisson relatifs à la température et au temps de cuisson.

Bien que l'invention ait été décrite en liaison avec des exemples particuliers de réalisation, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention.

Ainsi, dans une variante de réalisation non représentée, il est possible d'envisager qu'une partie des moyens de traitement 12 soient localisés au niveau du serveur distant SERV.

L'au moins un spectre d'analyse SA est donc également transmis vers le serveur distant SERV pour être traité par cette partie des moyens de traitement 12.

L'autre partie des moyens de traitement 12 conservée dans le cuiseur 10 à riz procède à l'affichage sur l'interface utilisateur 17 et aux paramétrages du programme de cuisson de la séquence d'instructions particulière SIP ainsi déterminée.

## Revendications

1. Système (1) de cuisson de riz comprenant :
- un cuiseur (10) à riz comprenant :
- une cuve (11) apte à recevoir une quantité déterminée de riz à cuire, et
- des moyens de traitement (12) aptes à exécuter une séquence d'instructions pour contrôler des étapes de préparation et de cuisson du riz ou simplement des étapes de cuisson du riz reçu dans la cuve (11),
- un premier moyen de communication (13) avec un verre doseur (20),
- un verre doseur (20) comprenant :
- un contenant (21) destiné à mesurer une quantité de riz à introduire dans la cuve (11) du cuiseur (10) à riz,
- un spectromètre à proche infrarouge (22) apte à acquérir au moins un spectre d'analyse (SA) du riz disposé dans le contenant (21),
- un deuxième moyen de communication (23) apte à échanger l'au moins un spectre d'analyse (SA) avec le cuiseur (10) à riz via le premier moyen de communication (13),
- une source d'alimentation (24) apte à alimenter en énergie le spectromètre à proche infrarouge (22) et le deuxième moyen de communication (23),
- un modèle prédictif (40) prédéterminé établi à partir d'une base de données (30) comprenant des séquences d'instructions de référence (SIR) associées à des spectres d'analyse de référence (SAR) portant sur des riz de natures différentes,
les moyens de traitement (12) étant agencés pour déterminer une séquence d'instructions particulière (SIP) en fonction du modèle prédictif (40) prédéterminé et de l'au moins un spectre d'analyse (SA) du riz réalisé à partir du spectromètre à proche infrarouge (22).

2. Système (1) selon la revendication 1, dans lequel les moyens de traitement (12) déterminent une séquence d'instructions particulière (SIP) en se basant sur une analyse statistique ou sur une classification de l'au moins un spectre d'analyse (SA) délivré par le spectromètre à proche infrarouge (22) par rapport aux séquences d'instructions de référence (SIR) de la base de données (30).

3. Système (1) selon l'une des revendications 1 ou 2, dans lequel la base de données (30) est comprise dans le cuiseur (10) à riz ou bien le cuiseur (10) à riz comprend des moyens supplémentaires de communication (16) avec un serveur distant (SERV) et la base de données (30) est comprise en tout ou partie dans le serveur distant (SERV).

4. Système (1) selon l'une des revendications 1 à 3, dans lequel le verre doseur (20) comprend un module de charge (25) de la source d'alimentation (24) apte à interagir avec un dispositif de chargeur sans fil (14).

5. Système (1) selon la revendication 4, dans lequel le cuiseur (10) à riz comprend le dispositif de chargeur sans fil (14) apte à interagir avec le module de charge (25) du verre doseur (20).

6. Système (1) selon la revendication 5, dans lequel le cuiseur (1) à riz comprend un logement (15) de stockage apte à recevoir le verre doseur (20) et à le positionner de manière à ce que le dispositif de chargeur sans fil (14) puisse interagir avec le module de charge (25) de la source d'alimentation (24).

7. Système (1) selon l'une des revendications 1 à 6, dans lequel le premier moyen de communication (13) et le deuxième moyen de communication (23) sont du type sans fil, de préférence selon un protocole de communication Bluetooth.

8. Système (1) selon l'une des revendications 1 à 7, dans lequel le cuiseur (10) à riz comprend une interface utilisateur (17) apte à déclencher l'acquisition de l'au moins un spectre d'analyse (SA) par le spectromètre à proche infrarouge (22).

9. Système (1) selon l'une des revendications 1 à 8, dans lequel une séquence d'instructions comprend l'affichage sur une interface utilisateur (17) d'actions à réaliser par l'utilisateur, notamment un nombre de rinçages, un temps de trempage et/ou une quantité d'eau de cuisson à verser dans la cuve (11) et un programme de cuisson déterminé, notamment avec des paramètres de cuisson comme la température de cuisson et le temps de cuisson, ou bien une séquence d'instructions comprend simplement un programme de cuisson déterminé, notamment avec des paramètres de cuisson comme la température de cuisson et le temps de cuisson.

10. Système (1) selon l'une des revendications 1 à 9, dans lequel le modèle prédictif (40) se base sur des propriétés intrinsèques du riz comme le taux d'amylose et/ou le taux d'amylopectine et/ou la température de gélatinisation et/ou la variété/type/nature de riz, et/ou sur d'autres paramètres comme la marque commerciale du riz et/ou tout autre paramètre en corrélation avec une séquence d'instructions optimale pour la cuisson du riz.

11. Procédé de cuisson de riz à partir d'un système (1) selon l'une des revendications 1 à 10, comprenant des étapes consistant à :
(i) verser du riz dans le contenant (21) du verre doseur (20),
(ii) acquérir au moins un spectre d'analyse (SA) du riz à partir du spectromètre à proche infrarouge (22) du verre doseur (20),
(iii) communiquer cet au moins un spectre d'analyse (SA) au cuiseur (10) à riz,
(iv) déterminer une séquence d'instructions particulière (SIP) à l'aide du modèle prédictif (40) prédéterminé et de l'au moins un spectre d'analyse (SA) du riz réalisé à partir du spectromètre à proche infrarouge (22),
(v) suivre la séquence d'instructions particulière (SIP) pour cuire le riz.

12. Procédé selon la revendication 11 comportant une étape préalable à l'étape (iv) au cours de laquelle un nombre de personnes destinées à consommer le riz est déterminé, les séquences d'instructions de référence (SIR) étant également associées à des nombres de personnes destinées à consommer le riz.

## Patentansprüche

1. Reiskochsystem (1), das umfasst:
- einen Reiskocher (10), der umfasst:
- eine Wanne (11), die dazu geeignet ist, eine bestimmte Menge von Reis, die gekocht werden soll, aufzunehmen, und
- Verarbeitungsmittel (12), die dazu geeignet sind, eine Folge von Anweisungen auszuführen, um Zubereitungs- und Kochschritte des Reises oder einfach Kochschritte des Reises, der in der Wanne (11) aufgenommen ist, zu steuern,
- ein erstes Kommunikationsmittel (13) mit einem Messbecher (20),
- einen Messbecher (20), der umfasst:
- einen Behälter (21), der dazu bestimmt ist, eine Reismenge, die in die Wanne (11) des Reiskochers (10) einzubringen ist, zu messen,
- ein Nahinfrarot-Spektrometer (22), das dazu geeignet ist, mindestens ein Analysespektrum (SA) des Reises, der in dem Behälter (21) angeordnet ist, zu ermitteln,
- ein zweites Kommunikationsmittel (23), das dazu geeignet ist, das mindestens eine Analysespektrum (SA) mit dem Reiskocher (10) über das erste Kommunikationsmittel (13) auszutauschen,
- eine Versorgungsquelle (24), die dazu geeignet ist, das Nahinfrarot-Spektrometer (22) und das zweite Kommunikationsmittel (23) mit Leistung zu versorgen,
- ein vorbestimmtes Vorhersagemodul (40), das ausgehend von einer Datenbank (30) erstellt wird, das Referenzanweisungsfolgen (SIR) umfasst, die mit Referenzanalysespektren (SAR), die Reise mit unterschiedlichen Beschaffenheiten betreffen, assoziiert sind,
wobei die Verarbeitungsmittel (12) eingerichtet sind, um eine Sonderanweisungsfolge (SIP) in Abhängigkeit von dem vorbestimmten Vorhersagemodell (40) und des mindestens einen Analysespektrums (SA) des Reises, das ausgehend von dem Nahinfrarot-Spektrometer (22) ausgeführt wird, zu bestimmen.

2. System (1) nach Anspruch 1, wobei die Verarbeitungsmittel (12) eine Sonderanweisungsfolge (SIP) bestimmen, indem sie sich auf eine statistische Analyse oder eine Klassifizierung des mindestens eines Analysespektrums (SA), das von dem Nahinfrarot-Spektrometer (22) in Bezug auf die Referenzanweisungsfolgen (SIR) der Datenbank (30) geliefert wird, basieren.

3. System (1) nach einem der Ansprüche 1 oder 2, wobei die Datenbank (30) in dem Reiskocher (10) enthalten ist, oder der Reiskocher (10) zusätzliche Mittel (16) zur Kommunikation mit einem Fernserver (SERV) umfasst, und sich die Datenbank (30) ganz oder teilweise in dem Fernserver (SERV) befindet.

4. System (1) nach einem der Ansprüche 1 bis 3, wobei der Messbecher (20) ein Lademodul (25) der Versorgungsquelle (24) umfasst, das dazu geeignet ist, mit einer drahtlosen Ladevorrichtung (14) zu interagieren.

5. System (1) nach Anspruch 4, wobei der Reiskocher (10) die drahtlose Ladevorrichtung (14), die dazu geeignet ist, mit dem Lademodul (25) des Messbechers (20) zu interagieren, umfasst.

6. System (1) nach Anspruch 5, wobei der Reiskocher (1) ein Aufbewahrungsfach (15) umfasst, das dazu geeignet ist, den Messbecher (20) aufzunehmen und ihn derart zu positionieren, dass die drahtlose Ladevorrichtung (14) mit dem Lademodul (25) der Versorgungsquelle (24) interagieren kann.

7. System (1) nach einem der Ansprüche 1 bis 6, wobei das erste Kommunikationsmittel (13) und das zweite Kommunikationsmittel (23) vom drahtlosen Typ, bevorzugt gemäß einem Bluetooth-Kommunikationsmodul, sind.

8. System (1) nach einem der Ansprüche 1 bis 7, wobei der Reiskocher (10) eine Benutzeroberfläche (17) umfasst, die dazu geeignet ist, das Ermitteln des mindestens einen Analysespektrums (SA) durch das Nahinfrarot-Spektrometer (22) auszulösen.

9. System (1) nach einem der Ansprüche 1 bis 8, wobei eine Anweisungsfolge die Anzeige auf einer Benutzeroberfläche (17) von Aktionen umfasst, die der Benutzer ausführen soll, insbesondere eine Anzahl von Spülungen, eine Einweichzeit und/oder eine Kochwassermenge, die in die Wanne (11) zu schütten ist, und ein bestimmtes Kochprogramm, insbesondere mit Kochparametern, wie der Kochtemperatur und der Kochzeit, oder eine Anweisungsfolge umfasst einfach ein bestimmtes Kochprogramm, insbesondere mit Kochparametern, wie der Kochtemperatur und der Kochzeit.

10. System (1) nach einem der Ansprüche 1 bis 9, wobei das Vorhersagemodell (40) auf intrinsischen Eigenschaften des Reises, wie dem Amylosegehalt und/oder dem Amylopektingehalt und/oder der Gelatinierungstemperatur und/oder der Sorte/des Typs/der Beschaffenheit von Reis basiert, und/oder auf anderen Parametern, wie der Handelsmarke des Reises und/oder jedem anderen Parameter im Zusammenhang mit einer optimalen Anweisungsfolge für das Kochen des Reises.

11. Reiskochverfahren ausgehend von einem System (1) nach einem der Ansprüche 1 bis 10, das die Schritte umfasst, die bestehen aus:
(i) Schütten des Reises in den Behälter (21) des Messbechers (20),
(ii) Ermitteln mindestens eines Analysespektrums (SA) des Reises ausgehend von dem Nahinfrarot-Spektrometer (22) des Messbechers (20),
(iii) Kommunizieren dieses mindestens einen Analysespektrums (SA) zu dem Reiskocher (10),
(iv) Bestimmen einer Sonderanweisungsfolge (SIP) mit Hilfe des vorbestimmten Vorhersagemodells (40) und des mindestens einen Analysespektrums (SA) des Reises, das ausgehend von dem Nahinfrarot-Spektrometer (22) ausgeführt wird,
(v) Befolgen der Sonderanweisungsfolge (SIP) zum Kochen des Reises.

12. Verfahren nach Anspruch 11, das einen Schritt vor dem Schritt (iv) umfasst, in dessen Verlauf die Anzahl von Personen, die den Reis verzehren soll, bestimmt wird, wobei die Referenzanweisungsfolgen (SIR) auch mit Anzahlen von Personen, die den Reis verzehren sollen, assoziiert sind.

## Claims

1. System (1) for cooking rice comprising:
- a rice cooker (10) comprising:
∘ a vessel (11) suitable for receiving a determined quantity of rice to be cooked, and
∘ processing means (12) suitable for executing a sequence of instructions for controlling steps of preparing and cooking rice or simply steps for cooking rice received in the vessel (11),
∘ a first means for communicating (13) with a measuring cup (20),
- a measuring cup (20) comprising:
∘ a container (21) intended to measure a quantity of rice to be introduced in the vessel (11) of the rice cooker (10),
∘ a near infrared spectrometer (22) suitable for acquiring at least one analysis spectrum (SA) of the rice placed in the container (21),
∘ a second communication means (23) suitable for exchanging the at least one analysis spectrum (SA) with the rice cooker (10) via the first communication means (13),
∘ a power source (24) suitable for powering the near infrared spectrometer (22) and the second communication means (23),
- a predetermined predictive model (40) created using a database (30) comprising reference instruction sequences (SIR) associated with reference analysis spectra (SAR) relating to different types of rice,
the processing means (12) being designed to determine a particular instruction sequence (SIP) according to the predetermined predictive model (40) and the at least one analysis spectrum (SA) of the rice produced using the near infrared spectrometer (22).

2. System (1) according to claim 1, wherein the processing means (12) determine a particular instruction sequence (SIP) by being based on a statistical analysis or on a classification of the at least one analysis spectrum (SA) delivered by the near infrared spectrometer (22) with respect to the reference instruction sequences (SIR) of the database (30).

3. System (1) according to one of claims 1 or 2, wherein the database (30) is comprised in the rice cooker (10) or the rice cooker (10) comprises additional means for communicating (16) with a remote server (SERV) and the database (30) is comprised totally or partially in the remote server (SERV).

4. System (1) according to one of claims 1 to 3, wherein the measuring cup (20) comprises a module for charging (25) the power source (24) suitable for interacting with a wireless charging device (14).

5. System (1) according to claim 4, wherein the rice cooker (10) comprises the wireless charging device (14) suitable for interacting with the module for charging (25) the measuring cup (20).

6. System (1) according to claim 5, wherein the rice cooker (1) comprises a storage housing (15) suitable for receiving the measuring cup (20) and for positioning it such that the wireless charging device (14) can interact with the module for charging (25) the power source (24).

7. System (1) according to one of claims 1 to 6, wherein the first communication means (13) and the second communication means (23) are of the wireless type, preferably according to a Bluetooth communication protocol.

8. System (1) according to one of claims 1 to 7, wherein the rice cooker (10) comprises a user interface (17) suitable for triggering the acquisition of the at least one analysis spectrum (SA) by the near infrared spectrometer (22).

9. System (1) according to one of claims 1 to 8, wherein an instruction sequence comprises the display on a user interface (17) of actions to carry out by the user, in particular a number of rinses, a soaking time and/or a quantity of cooking water to pour into the vessel (11) and a determined cooking programme, in particular with cooking parameters, like the cooking temperature and the cooking time, or an instruction sequence comprises simply a determined cooking programme, in particular with cooking parameters, like the cooking temperature and the cooking time.

10. System (1) according to one of claims 1 to 9, wherein the predictive model (40) is based on the intrinsic properties of rice, like the amylose ratio and/or the amylopectin ratio and/or the gelatinisation temperature and/or the rice variety/type/nature, and/or on other parameters like the commercial brand of the rice and/or any other parameter in correlation with an optimal instruction sequence for cooking rice.

11. Method for cooking rice from a system (1) according to one of claims 1 to 10, comprising steps consisting of:
(i) pouring the rice in the container (21) of the measuring cup (20),
(ii) acquiring at least one analysis spectrum (SA) of the rice from the near infrared spectrometer (22) of the measuring cup (20),
(iii) communicating this at least one analysis spectrum (SA) to the rice cooker (10),
(iv) determining a particular instruction sequence (SIP) using the predetermined predictive model (40) and the at least one analysis spectrum (SA) of the rice made from the near infrared spectrometer (22),
(v) following the particular instruction sequence (SIP) for cooking rice.

12. Method according to claim 11 comprising a step prior to step (iv) during which a number of people intended to consume the rice is determined, the reference instructions sequence (SIR) being also associated with numbers of people intended to consume the rice.
